# FASCICULE DE BREVET EUROPEEN

(11) **EP 3 030 808 B1**
(45) Date de publication et mention de la délivrance du brevet: **14.06.2017**
(21) Numéro de dépôt: 14790183.9
(22) Date de dépôt: 06.08.2014
(51) Int. Cl.: F16H 57/04

(54) **RÉDUCTEUR À TRAIN ÉPICYCLOÏDAL AVEC CANALISATIONS DE TRANSFERT DE FLUIDE, ET 5 TURBOMACHINE À HÉLICE(S) POUR AÉRONEF AVEC UN TEL RÉDUCTEUR**
EPIZYKLISCHES UNTERSETZUNGSGETRIEBE MIT FLÜSSIGKEITSLEITENDEN ROHREN SOWIE PROPELLERTURBOMASCHINE FÜR EIN FLUGZEUG MIT SOLCH EINEM UNTERSETZUNGSGETRIEBE
EPICYCLIC REDUCTION GEAR WITH FLUID TRANSFER PIPES, AND PROPELLER TURBOMACHINE FOR AN AIRCRAFT WITH SUCH A REDUCTION GEAR

(30) Priorité: 08.08.2013 FR 1357907
(43) Date de publication de la demande: 15.06.2016
(73) Titulaire: Safran Aircraft Engines, 75015 Paris (FR)
(72) Inventeur: CURLIER, Augustin, F-77550 Moissy Cramayel Cedex (FR); BOUDEBIZA, Tewfik, F-77550 Moissy Cramayel Cedex (FR); CHARIER, Gilles, Alain, F-77550 Moissy Cramayel Cedex (FR)
(74) Mandataire: Gevers & Orès
(86) Numéro de dépôt international: PCT/FR2014/052051
(87) Numéro de publication internationale: WO 2015/019025

(56) Documents cités:
- WO-A1-2010/092263
- US-A- 5 720 216
- US-A1- 2009 247 348
- US-A1- 2010 317 478

## Description

La présente invention concerne le domaine des réducteurs épicycloïdaux et plus particulièrement, quoique non exclusivement, l'application d'un tel réducteur épicycloïdal à une turbomachine à doublet d'hélices de propulsion contrarotatives. L'état de l'art comprend les documents US-A1-2010/317478 qui montre le préambule de la revendication 1, et US-A-5,720,216.

Les turbomachines à hélices de propulsion sont, dans l'application préférentielle, des turbomoteurs désignés par l'expression anglaise « open rotor » ou « unducted fan » et qui font notamment l'objet de nombreux développements en raison de leur moindre consommation de carburant comparativement aux turboréacteurs multiflux en service sur les aéronefs commerciaux. L'architecture des systèmes propulsifs de type open rotor se distingue de celle des turboréacteurs par le fait que la soufflante est, non plus interne, mais externe et qu'elle se compose de deux hélices coaxiales et contrarotatives pouvant être situées en amont ou en aval du générateur de gaz.

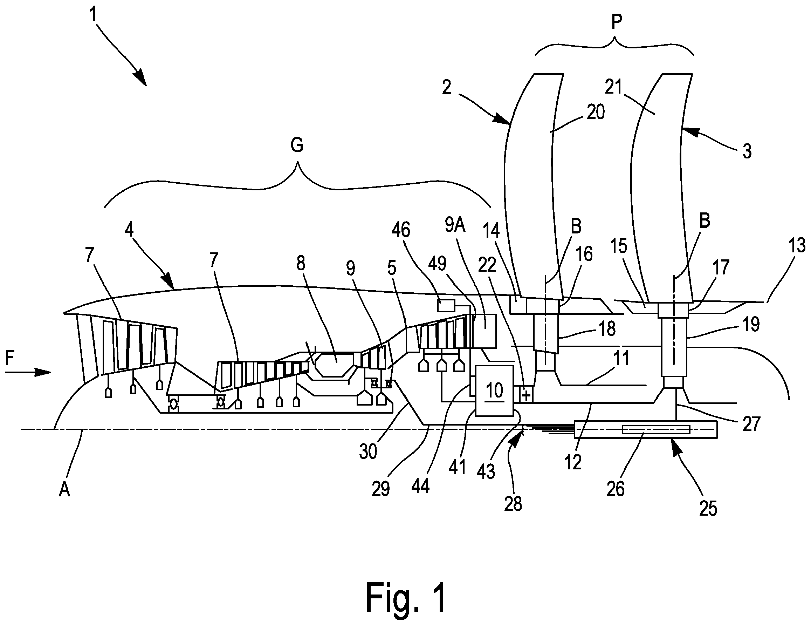

Un turbomoteur 1 à doublet d'hélices contrarotatives amont 2 et aval 3 est représenté schématiquement en regard de la figure 1 et comporte principalement, selon un axe longitudinal central A, deux parties distinctes. Une partie « générateur de gaz » G est située à l'intérieur d'une nacelle cylindrique fixe 4 à carter structural 5, portée par la structure de l'aéronef (comme la partie arrière du fuselage d'un avion), et une partie « propulsion » P avec le doublet d'hélices contrarotatives 2, 3 constituant la soufflante non carénée (« open rotor »). Cette partie P prolonge, dans cet exemple de turbomoteur, la partie générateur de gaz G et la nacelle 4.

La partie générateur de gaz G du turbomoteur 1 comporte usuellement, d'amont en aval selon le sens d'écoulement, par rapport à l'axe A, du flux gazeux F entrant dans la nacelle 4 du turbomoteur, un ou deux compresseurs 7 selon l'architecture du générateur de gaz à simple ou double corps, une chambre annulaire de combustion 8, une ou plusieurs turbines 9 à pression distincte selon ladite architecture, dont l'une d'elles 9A entraîne, par l'intermédiaire d'un réducteur ou boîtier à trains épicycloïdaux 10 (désigné par l'acronyme anglais PGB pour Power Gear Box) et de façon contrarotative, les arbres concentriques et coaxiaux 11 et 12 des deux hélices amont 2 et aval 3, alignées selon l'axe A du turbomoteur. Une tuyère 13 termine de façon usuelle le turbomoteur 1.

Concernant la partie propulsion P, les deux hélices contrarotatives, respectivement amont (avant) 2 et aval (arrière) 3, sont disposées dans des plans parallèles radiaux, perpendiculaires à l'axe A, et comprennent des carters rotatifs à anneaux polygonaux 14, 15 prolongeant la nacelle et dans lesquels sont ménagés des logements cylindriques radiaux 16, 17 régulièrement répartis pour la réception des pieds ou pivots 18, 19 des pales 20, 21 des hélices.

Les carters à anneaux 14, 15 sont respectivement reliés aux arbres d'entraînement 11, 12 tournant dans des sens de rotation inverses par le biais de la turbine et du réducteur 10, ce dernier imposant les sens de rotation inverses aux deux hélices. Pour garantir le positionnement des arbres de l'hélice amont et de l'hélice aval l'un par rapport à l'autre, plusieurs paliers sont prévus dont l'un 22 se trouve entre les deux arbres 11 et 12 des hélices amont et aval, l'arbre 12 de l'hélice aval 3 étant radialement interne par rapport à l'arbre 11 de l'hélice amont 2 alors radialement externe.

Compte tenu des sollicitations dynamiques rencontrées lors du fonctionnement du turbomoteur, une lubrification appropriée qui fait l'objet de la présente invention est prévue pour ce palier, comme d'ailleurs pour tous les autres paliers non représentés, présents dans le turbomoteur.

Avant d'en venir à la lubrification de ce palier, objet de l'invention, en fonctionnement et brièvement, le flux d'air F entrant dans le turbomoteur 1 est comprimé, puis mélangé à du carburant et brûlé dans la chambre de combustion 8. Les gaz de combustion engendrés passent ensuite dans la partie à turbines 9 et 9A pour entraîner en rotation inverse, via le réducteur épicycloïdal 10, les hélices 2, 3 qui fournissent la majeure partie de la poussée. Les gaz de combustion sont expulsés à travers la tuyère 13 augmentant ainsi la poussée du turbomoteur 1.

Par ailleurs, pour permettre le fonctionnement optimal du turbomoteur 1 selon les différentes phases de vol rencontrées, un système de commande approprié 25 permet de faire varier le calage des pales en cours de vol, c'est-à-dire le pas des hélices contrarotatives. Pour cela, les pivots 18, 19 des pales radiales sont entraînés en rotation par le système 25 pour tourner, par rapport à leurs axes B sensiblement perpendiculaires à l'axe longitudinal A, dans les logements radiaux 16, 17. Par exemple, selon le système, les pales peuvent tourner de + 90° à 30° pour les phases de vol, de l'ordre de + 30° à - 15° pour les phases au sol et d'inversion de poussée, et avoir un retour rapide à 90°, en position drapeau, en cas de dysfonctionnement en vol (panne moteur), pour laquelle les pales sont effacées par rapport à la direction d'avance de l'avion et offrent le moins de traînée possible.

Le système de commande 25 des pales de l'hélice aval 3 est schématisé par un rectangle sur la figure 1 et comprend généralement un actionneur linéaire fluidique 26 auquel est relié un mécanisme de liaison 27 reliant la partie mobile de l'actionneur aux pivots 19 des pales 21 pour transformer la translation de l'actionneur en une rotation des pales de l'hélice aval autour des axes B. Un système de commande du pas des pales, non représenté, est également prévu pour l'hélice amont.

Les lignes 28 comprennent des lignes d'alimentation en lubrifiant ainsi que des lignes d'huile haute pression qui sont au nombre de trois pour les phases spécifiques de fonctionnement ci-dessus du système de commande de pas 25, et courent à l'intérieur d'un fourreau cylindrique 29 logé, selon l'axe A, dans l'arbre interne 12 et relié mécaniquement en amont au carter d'échappement 30 du générateur de gaz G et en aval au système de commande 25 menant à l'actionneur 26.

Les lignes 28 d'alimentation en lubrifiant et d'huile haute pression sont respectivement alimentées depuis une source de lubrifiant et d'huile haute pression non représentée, située dans le carter structural 5, côté nacelle, et passent par des bras radiaux pour aboutir dans la partie générateur de gaz G.

En plus de ces lignes 28 du système de commande 25 transitent, dans le fourreau 29, des lignes de lubrification pour le palier inter-arbres 22 et pour d'autres paliers non représentés notamment celui situé entre le fourreau et l'arbre interne de l'hélice aval, ainsi que des lignes de servitudes électriques pour le fonctionnement du système de commande.

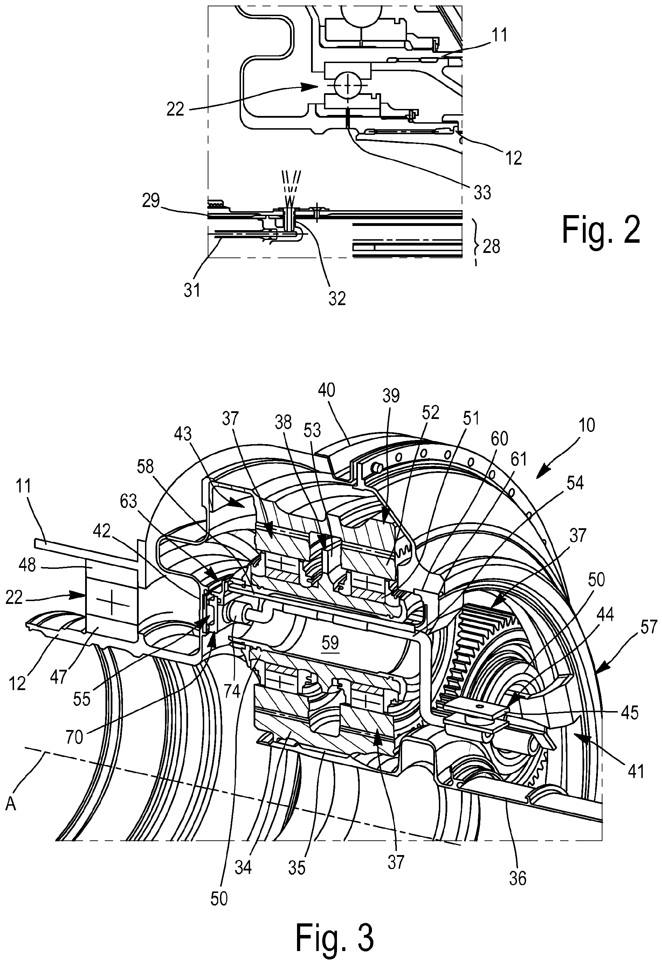

La lubrification du palier inter-arbres 22 est représentée en regard de la figure 2 où l'on voit que la ligne correspondante 31 courant dans le fourreau 29 se termine par au moins un gicleur 32 solidaire radialement de la paroi latérale du fourreau. L'huile circulant dans la ligne 31 et sortant du gicleur 32 traverse l'espace annulaire entre le fourreau 29 et l'arbre 12 d'hélice aval, puis parvient au palier inter-arbres 22 à lubrifier par des orifices 33 prévus dans la paroi latérale de l'arbre 12 de l'hélice aval.

On se rend donc compte de la multitude de lignes hydrauliques et électriques passant à l'intérieur de ce fourreau 29, ce qui implique à concevoir un fourreau diamétralement en conséquence pour y loger toutes les lignes. Dans l'application de l'invention, le diamètre extérieur du fourreau est tributaire du diamètre intérieur de l'arbre planétaire du réducteur 10 correspondant à celui de l'arbre d'entrée 35 de la turbine de puissance qui entraîne en rotation le réducteur 10. Le fourreau occupe donc un espace important au coeur du turbomoteur 1, qui pénalise l'intégration même du réducteur.

Aussi, pour faciliter une telle intégration, la demanderesse s'est posée la question de savoir s'il était possible de déplacer au moins l'une des lignes de lubrification des paliers transitant par le fourreau, en l'occurrence la ligne de lubrification du palier inter-arbres 22 (les lignes pour le système de commande du calage des pales de l'hélice aval n'étant pas déplaçables puisque devant alimenter l'actionneur situé en aval) pour la faire passer extérieurement à ce fourreau et permettre ainsi de contenir et de réduire dimensionnellement celui-ci en libérant de l'espace pour l'intégration du réducteur 10.

La présente invention a pour but d'apporter une solution à ce problème.

A cet effet, elle concerne un réducteur à train épicycloïdal comportant un arbre d'entrée planétaire d'axe longitudinal, des satellites s'engrenant autour dudit arbre et supportés par un porte-satellites, et deux côtés transversaux, le réducteur étant remarquable par le fait qu'il comprend au moins une canalisation de transfert de fluide apte à être raccordée à une source fluidique d'alimentation et traversant le porte-satellites, en étant liée en rotation à celui-ci, depuis un premier desdits côtés transversaux du réducteur jusqu'à un second desdits côtés transversaux de ce dernier pour déboucher à l'extérieur du réducteur et distribuer le fluide, et dans lequel la canalisation est pourvue, dudit second desdits côtés transversaux, d'une cavité annulaire contenant le fluide à distribuer en sortie du porte-satellites.

De préférence, ledit premier desdits côtés transversaux du réducteur est un côté amont, et ledit second desdits côtés transversaux du réducteur est un côté aval.

Ainsi, grâce à l'invention, on peut transférer du fluide directement à travers le porte-satellites du réducteur, depuis une source d'alimentation qui se trouve du côté transversal amont du réducteur, le faire traverser longitudinalement le porte-satellites tournant dans un sens, puis l'amener à l'extérieur de celui-ci, du côté transversal aval, pour lubrifier directement, par exemple, un organe, un mécanisme ou autre.

Dans l'application préférentielle du réducteur, le fluide circulant dans la canalisation lubrifie un palier ou analogue agencé d'un côté transversal (de préférence aval) du porte-satellites, extérieur à ce dernier.

Dans cette application, le réducteur épicycloïdal est différentiel pour entraîner en sortie deux arbres tournant à des vitesses différentes. Autour des satellites s'engrène une couronne extérieure à laquelle est apte à être relié un arbre de sortie portant le palier à lubrifier par le fluide sortant de la canalisation.

Ainsi, on peut transférer du lubrifiant à partir notamment de la source d'alimentation en huile de refroidissement du réducteur, et faire cheminer le lubrifiant entre deux référentiels ayant des vitesses de rotation différentes et non plus par le fourreau selon la solution antérieure, ce qui permet de limiter l'encombrement du fourreau et d'améliorer alors l'intégration du réducteur.

Selon une réalisation préférée, la canalisation fluidique traverse axialement l'un des axes creux du porte-satellites, autour des axes creux étant respectivement montés les satellites.

Pour une lubrification optimale, plusieurs axes creux du porte-satellites sont respectivement traversés par une canalisation fluidique.

Selon une autre caractéristique, une bague à doigts latéraux est liée d'un côté transversal (de préférence amont) au porte-satellites pour supporter la cavité fluidique. Avantageusement, les doigts latéraux de la bague traversent les axes creux du porte-satellites autour desquels sont montés les satellites, pour déboucher d'un côté transversal (de préférence aval) du porte-satellites et supporter la cavité fluidique. Les canalisations peuvent être liées aux doigts latéraux respectifs pour les maintenir et les guider.

Par ailleurs, dans un exemple préféré de réalisation, la cavité fluidique est formée par un anneau relié aux extrémités libres des doigts latéraux de la bague et présentant un logement ouvert axialement auquel sont raccordées les canalisations fluidiques d'un côté, et qui est apte à venir, de l'autre côté, au contact, avec étanchéité, d'une face d'appui de l'arbre portant le palier à lubrifier.

Avantageusement, les extrémités libres des doigts latéraux de la bague sont réunies par un anneau de support contre lequel est monté l'anneau formant la cavité fluidique, entre les deux anneaux assemblés est prévu un joint destiné à absorber les jeux fonctionnels et à presser axialement le logement de l'anneau formant la cavité contre la face d'appui.L'invention concerne également une turbomachine notamment pour aéronef, du type comportant une partie générateur de gaz et une partie de propulsion à doublet d'hélices coaxiales et contrarotatives entraînées par l'intermédiaire d'un réducteur épicycloïdal différentiel lié à une turbine de la partie générateur de gaz.

Avantageusement, le réducteur épicycloïdal différentiel est tel que défini précédemment.

Dans cette application, le réducteur épicycloïdal est préférentiellement différentiel pour entraîner en sortie deux arbres en rotation inverse, celui du porte-satellites auquel est lié l'arbre de l'hélice aval et celui de la couronne à laquelle est lié l'arbre de l'hélice amont. Le porte-satellites tourne dans le sens inverse à l'arbre planétaire. Autour des satellites s'engrène la couronne extérieure tournant en sens inverse du porte-satellites. Ainsi, on peut transférer du lubrifiant à partir notamment de la source d'alimentation en huile de refroidissement du réducteur, et faire cheminer le lubrifiant entre deux référentiels ayant des sens de rotation contraires.

Les figures du dessin annexé feront bien comprendre comment l'invention peut être réalisée.
La figure 1 est une vue schématique en coupe axiale d'un turbomoteur à doublet d'hélices contrarotatives en aval du générateur de gaz, et incorporant un réducteur épicycloïdal pour l'entraînement contrarotatif des arbres des hélices, et le palier inter-arbres à lubrifier.
La figure 2 est une vue en coupe axiale partielle du palier inter-arbres des hélices contrarotatives avec la solution de l'art antérieur consistant à lubrifier le palier depuis une ligne d'alimentation courant dans un fourreau interne aux arbres.
La figure 3 est une vue en perspective écorchée du réducteur épicycloïdal avec les canalisations pour lubrifier le palier inter-arbres conformément à la solution de l'invention.
Les figures 4 et 5 montrent, en perspective agrandie, respectivement de l'amont et de l'aval, l'une des canalisations d'acheminement du lubrifiant, la bague à doigts latéraux et la cavité de lubrifiant en direction du palier à lubrifier.
La figure 6 montre, en perspective, la bague à doigts latéraux.
La figure 7 est une coupe radiale des anneaux assemblés en contact avec la piste prévue sur l'arbre de l'hélice aval.
La figure 8 est une coupe de l'arbre de l'hélice aval avec un gicleur monté sur la piste de réception de la cavité, et fixée à l'arbre pour lubrifier le palier inter-arbres.

En se référant aux figures 1 et 3, pour permettre la rotation inverse des deux hélices amont 2 et aval 3, le réducteur 10 est différentiel, à train d'engrenages épicycloïdal inversé. A cet effet, il comporte, par rapport à l'axe longitudinal A, un arbre d'entrée planétaire sous la forme d'une roue dentée 34 qui est, dans cet exemple, montée par une liaison par cannelures 35 sur l'arbre de turbine 36 tournant dans un sens de rotation en entraînant le réducteur. Des satellites 37 s'engrènent autour de l'arbre d'entrée 34 et sont supportés par un porte-satellites 38 tournant en conséquence dans le sens de rotation inverse à l'arbre d'entrée, et une couronne externe 39 s'engrenant avec les satellites et tournant en conséquence dans le même sens de rotation que l'arbre d'entrée 34 et en sens inverse du porte-satellites 38.

Dans l'application au turbomoteur 1 à doublet d'hélices, l'arbre externe 11 d'entraînement de l'hélice amont 2 est solidaire en rotation du porte-satellites 38 par l'intermédiaire d'un bulbe annulaire 40 qui est constitué de pièces assemblés (figure 3) entourant le réducteur 10 et qui est lié, du côté transversal amont 41 du réducteur par rapport au flux F, selon l'axe A, au porte-satellites 38. Quant à l'arbre interne 12 d'entraînement de l'hélice aval 3, il se termine par une face transversale externe 42 normale à l'axe A du turbomoteur, et qui est solidaire en rotation de la couronne externe 39 du côté transversal aval 43 du réducteur.

Par ailleurs, à l'entrée du côté (ou face) transversal amont 41 du réducteur se trouve un palier de transfert d'huile 44 pour la lubrification du réducteur. Ce palier est partiellement représenté et comporte schématiquement deux parties annulaires. L'une interne 45 est partiellement représentée sur la figure 3 et est solidaire du porte-satellites et l'autre externe non représentée est solidaire d'un carter. Entre ces parties parvient un fluide de lubrification du réducteur issu d'une source d'alimentation amont 46 (figure 1) située dans le carter structural 5, et traversant l'un des bras radiaux 49. Le palier de transfert d'huile 44, le porte-satellites 38, le bulbe annulaire 40 et, donc, l'arbre externe 11 de l'hélice amont 2 sont liés en rotation et tournent par conséquent dans le même sens et à la même vitesse. En sortie du côté (ou face) transversal aval 43 du réducteur, se trouve le palier (roulement) inter-arbres 22 à lubrifier, dont la bague interne 47 est liée à l'arbre interne 12 de l'hélice aval, et la bague externe 48 est liée à l'arbre externe 11 de l'hélice amont, via son bulbe.

Avantageusement, pour lubrifier ce palier inter-arbres 22 en réduisant ainsi les lignes fluidiques passant dans le fourreau 29 et en libérant de l'espace pour le réducteur, l'invention consiste à transférer directement une partie du lubrifiant transitant dans le palier de transfert 44 et tournant dans un sens de rotation, vers le palier inter-arbres 22 en traversant de part en part, longitudinalement suivant l'axe A, le porte-satellites 38 tournant dans le sens correspondant à celui palier de transfert 44, jusqu'à la face transversale 42 de l'arbre 12 solidaire de la couronne 39 tournant dans l'autre sens, pour injecter directement le lubrifiant en direction du palier inter-arbres 22 dont les bagues interne et externe sont respectivement en liaison avec la couronne et le porte-satellites.

Avant d'en venir au mode de réalisation illustrant l'invention, le réducteur 10 sera décrit plus précisément ci-après. De façon usuelle dans ce type de réducteur différentiel 10 et comme le montre la figure 3, les satellites 37 sont régulièrement répartis autour de l'arbre de turbine d'entrée 36 et leurs dentures coopèrent avec celle de la roue dentée intermédiaire 34 solidaire en rotation de l'arbre d'entrée 36. En variante, la roue dentée pourrait faire partie intégrante dudit arbre.

Le porte-satellites 38 comporte, figure 3, des axes creux 50 parallèles à l'axe A et régulièrement répartis angulairement, et sur lesquels sont montés respectivement les satellites 37. Les axes creux sont liés entre eux par un collet de liaison 53 du porte-satellites. En particulier, chaque satellite 37 correspondent dans cet exemple à deux paliers (roulements) identiques montés, de façon alignée et espacée l'un de l'autre par le collet 53, sur l'axe creux 50. Les bagues internes 51 des paliers sont immobilisées sur chaque axe creux du porte-satellites, tandis que les bagues externes 52 portant en périphérie les dentures coopèrent avec une denture intérieure de la couronne externe 39 en entraînant celle-ci en rotation inverse. Au porte-satellites 38 est solidaire, par le côté transversal amont 41, le bulbe ou bride annulaire 40 terminant l'extrémité correspondante de l'arbre 11 de l'hélice amont et entourant le réducteur.

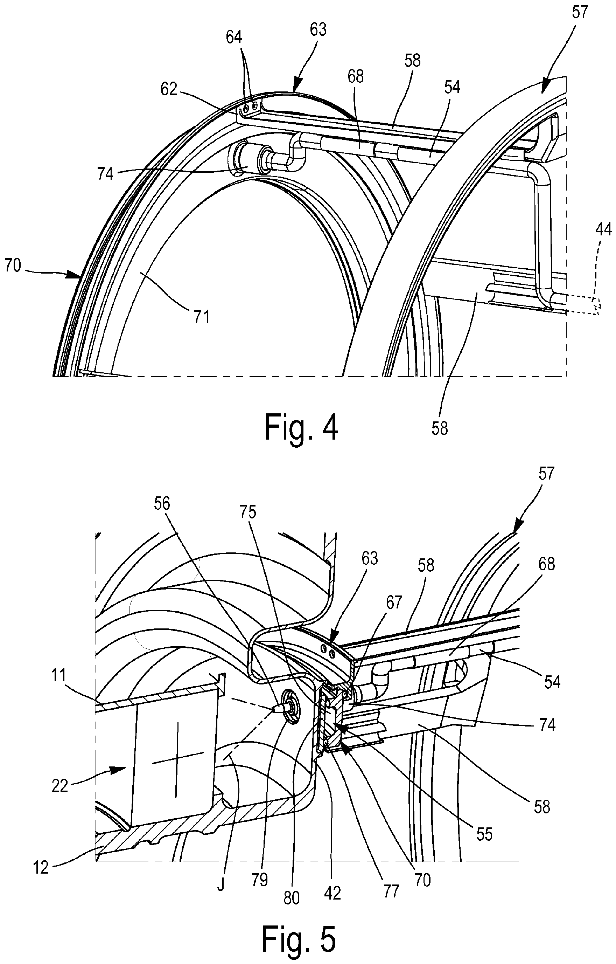

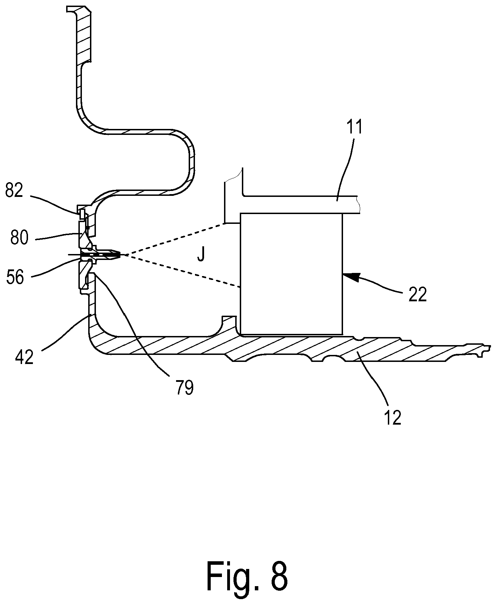

Le transfert de lubrification comporte, dans cet exemple montré notamment sur les figures 3, 4 et 5, un moyen à pluralité de canalisations 54 menant à une cavité de collecte 55 du lubrifiant, des gicleurs 56 (figures 5 et 8) communiquant avec la cavité et éjectant le lubrifiant vers le palier 22, et une bague 57 à doigts latéraux 58 traversant axialement le réducteur.

Par canalisation, on entend tout objet allongé tel qu'un conduit, une tubulure, un tube, etc., permettant, compte tenu des conditions de fonctionnement mécaniquement et thermiquement élevées, de faire circuler un fluide en toute sécurité.

Les canalisations 54 sont reliées, du côté transversal amont 41 du réducteur, au palier de transfert d'huile 44 pour y recevoir une partie de l'huile circulant dans ce dernier, et elles traversent le porte-satellites 38, avec lequel elles tournent dans le même sens, en passant par les passages internes 59 des axes creux 50, sensiblement parallèlement à ceux-ci. Les canalisations 54 débouchent, de l'autre côté transversal aval 43 du réducteur, pour être raccordées à la cavité 55, comme on le verra ci-après. En outre, les canalisations 54 sont guidées le long des doigts 58 en étant liées à ceux-ci par des clips ou autres moyens de retenue 68.

Au préalable, comme le montrent les figures 3 à 6, la bague 57 est montée du côté transversal amont 41 du réducteur pour se fixer dans un épaulement annulaire interne 60 terminant le bulbe de l'arbre de l'hélice amont à l'aide d'un circlip 61 ou analogue et d'une liaison du type languette - rainure pour verrouiller angulairement la bague au bulbe dans la position voulue. La liaison n'est pas représentée sur les figures. Les doigts latéraux 58 de la bague, disposés parallèlement à l'axe longitudinal A, sont, dans cet exemple, en nombre identique aux axes creux 50 du porte-satellites, axes que les doigts traversent respectivement pour déboucher de l'autre côté transversal 43.

Les extrémités libres 62 des doigts de la bague 57 ont pour but de porter la cavité 55 qui est amenée à être au contact de la face transversale 42 de l'arbre interne 12 de l'hélice aval. On comprend donc que la bague 57 permet de passer d'un référentiel de rotation tournant dans un sens à la même vitesse (celui regroupant le palier de transfert d'huile 44, le porte-satellites 38, le bulbe 40 de l'arbre externe 11 de l'hélice amont, et la bague 57 avec la cavité associée 55 et les canalisations 54 raccordées à cette bague) à un autre référentiel tournant dans le sens inverse (celui regroupant la couronne externe 39 du réducteur et l'arbre interne 12 de l'hélice aval).

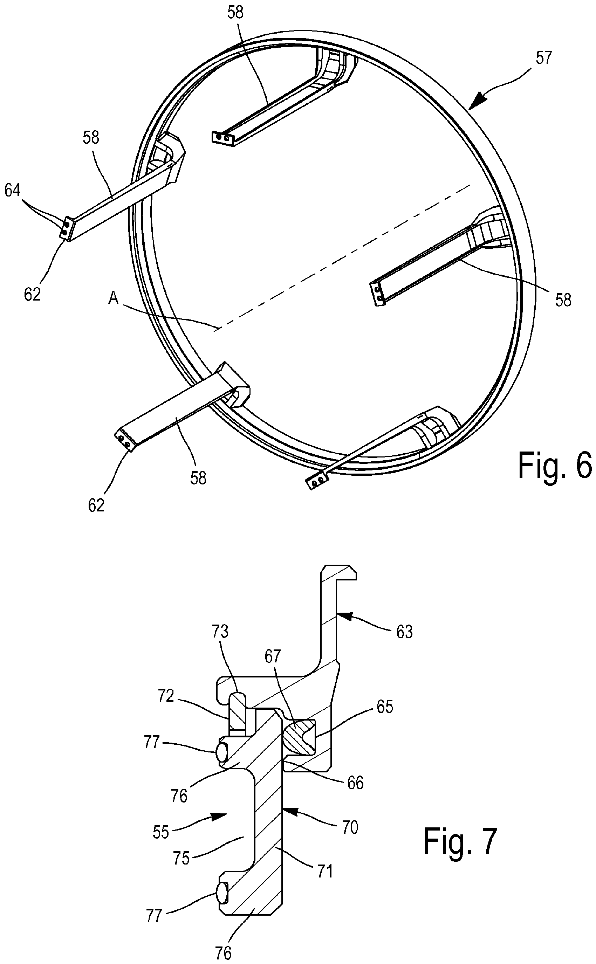

De plus, sur l'ensemble des extrémités libres 62 des doigts 58 est fixé un anneau de support commun 63 par des éléments de fixation 64 (vis ou analogues) traversant respectivement des trous prévus dans des ergots d'extrémité des doigts, comme le montrent les figures 4 à 6. L'anneau de support 63 présente par ailleurs, figure 7, une gorge annulaire 65 ménagée dans une face transversale 66 de l'anneau, tournée vers l'extérieur de la bague à doigts latéraux (et donc du réducteur) et qui reçoit un joint 67 dont le rôle sera précisé ultérieurement.

Sur cet anneau de support 63 est rapporté fixement un anneau 70 destiné à former la cavité 55 du transfert d'huile via les canalisations 54, en direction du palier inter-arbres. En particulier, comme le montrent les figures 5 et 7, cet anneau 70 formant la cavité 55 présente une section en U, dont la base 71 est rapportée contre la face transversale 66 de l'anneau de support 63 en comprimant axialement le joint 67. L'anneau 70 formant la cavité est maintenu, par rapport à l'anneau de support, axialement par un circlip ou analogue 72 se logeant dans une gorge périphérique interne 73 de l'anneau 63, figure 7, et angulairement par une liaison languette - rainure connue en soi et non représentée.

Dans la base 71 de l'anneau 70 formant la cavité sont reliées, par des raccords appropriés 74, les canalisations d'acheminement 54 du lubrifiant, comme le montrent notamment les figures 3, 4 et 5.

La cavité de lubrifiant 55 acheminé par ces canalisations 54, qui peuvent être métalliques rigides ou semi-rigides, est définie par le logement annulaire interne 75 du U avec la face transversale 42 de l'arbre interne 12. On voit, sur les figures 5 et 7, que les extrémités des ailes 76 du U viennent au contact, par ailleurs avec étanchéité au moyen de joints annulaires 77 logés en bout des ailes de l'anneau 70 à cavité, d'une piste 80 en forme de rondelle maintenue de manière solidaire, sur la face transversale 42 de l'arbre interne et servant d'appui aux ailes de l'anneau en comprimant les joints annulaires. Le lubrifiant est donc contenu de façon étanche dans le logement 75 par les joints 77, sans fuir vers l'extérieur, tout en transitant entre deux référentiels rotatifs inverses.

La piste 80 est notamment illustrée en regard de la figure 8 où l'on voit qu'elle est montée dans un logement 81 ménagé dans la face transversale 42 de l'arbre interne 12 en y étant maintenue par un circlip 82 et par une liaison angulaire rainure - languette non représentée. Dans cette piste 80 sont reçus, par vissage ou tout autre moyen de fixation approprié, les gicleurs 56 qui traversent des trous 79 ménagés dans la face transversale 42. On a représenté schématiquement, en regard des figures 5 et 8, le jet J des gicleurs 56 en sortie arrière de la face transversale 42 pour lubrifier en continu le palier inter-arbres 22 qui se trouve en vis-à-vis entre les arbres 11 et 12 des hélices.

Pour assurer la tenue mécanique et thermique des joints 77, ces derniers sont de préférence en carbone et la piste 80 est métallique.

Par ailleurs, pour garantir la mise en position et donc le contact entre l'anneau 70 et la piste 80 de l'arbre délimitant entre eux la cavité 55, ainsi que pour tenir compte des jeux fonctionnels notamment axiaux, on utilise avantageusement le joint 67 prévu entre les deux anneaux assemblés 63 et 70. En effet, la position axiale de l'anneau 70 à cavité 55 pour le transfert d'huile la plus proche du circlip de maintien correspond à l'ouverture de jeu maximale dans le palier 22, à savoir le recul maximal de l'arbre 12 d'hélice aval par rapport au réducteur 10 et donc à l'arbre 11 d'hélice amont puisque le réducteur est monté rigidement sur cet arbre et qu'il convient de prendre aussi en compte les jeux fonctionnels pour déterminer l'ouverture. En cas de variation (réduction) de l'écartement entre les deux anneaux 63, 70, le joint 67, de préférence à section en oméga pour assurer une élasticité suffisante, se comprime en absorbant ainsi la variation du jeu. Même en cas d'écartement maximal des deux parois des anneaux, le joint 67 est toujours compressé et plaque en conséquence les joints en carbone 77 de l'anneau de transfert d'huile contre la piste en carbone montée sur l'arbre d'hélice aval.

La réalisation décrite ci-dessus en faisant passer le fluide lubrifiant au travers du réducteur épicycloïdal permet d'apporter une solution au problème du passage des lignes fluidiques dans un environnement déjà très encombré.

Bien que l'invention soit décrite ici en liaison avec un réducteur épicycloïdal différentiel, avec des arbres à rotation inverse, il va de soi qu'elle pourrait s'adapter à un réducteur épicycloïdal direct.

## Revendications

1. Réducteur à train épicycloïdal comportant un arbre d'entrée planétaire (35), des satellites (37) s'engrenant autour dudit arbre et supportés par un porte-satellites (38), et deux côtés transversaux (41, 43), **caractérisé par le fait qu'**il comprend au moins une canalisation de transfert de fluide (54) apte à être raccordée à une source fluidique d'alimentation et traversant le porte-satellites (38), en étant liée en rotation à celui-ci, depuis un premier desdits côtés transversaux (41) du réducteur (10) jusqu'à un second desdits côtés transversaux (43) de ce dernier pour déboucher à l'extérieur du réducteur et distribuer le fluide, et dans lequel la canalisation (54) est pourvue, dudit second desdits côtés transversaux, d'une cavité annulaire (55) contenant le fluide à distribuer en sortie du porte-satellites.

2. Réducteur selon la revendication 1, dans lequel la canalisation (54) lubrifie un palier ou analogue (22) agencé d'un côté transversal du porte-satellites, extérieur à ce dernier.

3. Réducteur selon la revendication 2, dans lequel, autour des satellites (37) s'engrène une couronne extérieure (39) à laquelle est apte à être relié un arbre de sortie (11) portant le palier à lubrifier (22) par le fluide sortant de la canalisation.

4. Réducteur selon l'une des revendications 1 à 3, dans lequel la canalisation fluidique (54) traverse axialement l'un des axes creux (50) du porte-satellites (38), autour des axes creux étant respectivement montés les satellites (37).

5. Réducteur selon l'une des revendications 1 à 4, dans lequel une bague (57) à doigts latéraux (58) est liée d'un côté transversal (41) au porte-satellites et supporte la cavité fluidique (55).

6. Réducteur selon la revendication 5, dans lequel plusieurs axes creux (50) du porte-satellites sont respectivement traversés par une canalisation fluidique (54).

7. Réducteur selon la revendication 6, dans lequel les doigts latéraux (58) de la bague traversent les axes creux (50) du porte-satellites, pour déboucher d'un côté transversal (43) du porte-satellite pour supporter la cavité fluidique.

8. Réducteur selon la revendication 7, dans lequel la cavité fluidique (55) est formée par un anneau (70) relié aux extrémités libres des doigts latéraux (58) de la bague (57) et présentant un logement ouvert axialement (75) auquel sont raccordées les canalisations fluidiques d'un côté, et qui est apte à venir, de l'autre côté, au contact, avec étanchéité, d'une face d'appui (42) de l'arbre portant le palier à lubrifier.

9. Réducteur selon la revendication 8, dans lequel les extrémités libres des doigts latéraux (58) de la bague sont réunies par un anneau de support (63) contre lequel est monté l'anneau (70) formant la cavité fluidique (55), entre les deux anneaux assemblés est prévu un joint (67) destiné à absorber les jeux fonctionnels et à presser axialement le logement de l'anneau formant la cavité contre la face d'appui.

10. Réducteur selon l'une des revendications 1 à 9, dans lequel ledit premier desdits côtés transversaux (41) du réducteur (10) est un côté amont, et ledit second desdits côtés transversaux (43) du réducteur (10) est un côté aval.

11. Turbomachine notamment pour aéronef, du type comportant une partie générateur de gaz (G) et une partie de propulsion (P) à doublet d'hélices coaxiales (2, 3) et contrarotatives entraînées par l'intermédiaire d'un réducteur épicycloïdal différentiel (10) lié à une turbine de la partie générateur de gaz, **caractérisée par le fait que** le réducteur épicycloïdal différentiel (10) est tel que défini selon l'une des revendications 1 à 10.

## Patentansprüche

1. Reduktor mit einem Planetengetriebe, der eine Planeteneingangswelle (35), wobei Planeten (37) um die Welle ineinandergreifen und von einem Planetenträger (38) getragen werden, und zwei Querseiten (41, 43) umfasst, **dadurch gekennzeichnet dass** er zumindest eine Leitung zur Übertragung von Fluid (54) umfasst, die eingerichtet ist, an eine fluidische Quelle zur Versorgung angeschlossen zu werden und durch den Planetenträger (38), wobei sie mit diesem drehbar verbunden ist, von einer ersten der Querseiten (41) des Reduktors (10) bis zu einer zweiten der Querseiten (43) des letzteren verläuft, um außerhalb des Reduktors zu münden und das Fluid zu verteilen, und wobei die Leitung (54) auf der zweiten der Querseiten mit einem ringförmigen Hohlraum (55) versehen ist, der das Fluid enthält, das am Ausgang des Planetenträgers zu verteilen ist.

2. Reduktor nach Anspruch 1, wobei die Leitung (54),ein Lager oder dergleichen (22) schmiert, das auf einer Querseite des Planetenträgers außerhalb des letzteren angeordnet ist.

3. Reduktor nach Anspruch 2, wobei um die Planeten (37) eine äußere Krone (39) ineinander greift, wobei eine Ausgangswelle (11) eingerichtet ist, mit ihr verbunden zu werden, die das Lager (22) trägt, das durch das Fluid, das aus dem Rohr austritt, geschmiert werden soll.

4. Reduktor nach einem der Ansprüche 1 bis 3, wobei die fluidische Leitung (54) axial durch eine der hohlen Achsen (50) des Planetenträgers (38) verläuft, wobei um die hohlen Achsen jeweils die Planeten (37) montiert sind.

5. Reduktor nach einem der Ansprüche 1 bis 4, wobei ein Ring (57) mit seitlichen Fingern (58) an einer Querseite (41) mit dem Planetenträger verbunden ist und den fluidischen Hohlraum (55) trägt.

6. Reduktor nach Anspruch 5, wobei mehrere hohle Achsen (50) des Planetenträgers jeweils durch eine fluidische Leitung (54) durchlaufen werden.

7. Reduktor nach Anspruch 6, wobei die seitlichen Finger (58) des Ringes durch die hohlen Achsen (50) des Planetenträgers verlaufen, um auf einer Querseite (43) des Planetenträgers zu münden, um den fluidischen Hohlraum zu tragen.

8. Reduktor nach Anspruch 7, wobei der fluidische Hohlraum (55) durch einen Ring (70) gebildet ist, der mit den freien Enden der seitlichen Finger (58) des Ringes (57) verbunden ist und ein axial offenes Gehäuse (75) aufweist, mit dem die fluidischen Leitungen auf einer Seite verbunden sind , und der geeignet ist, auf der anderen Seite dicht mit einer Auflagefläche (42) der Welle in Kontakt zu kommen, die das zu schmierende Lager trägt.

9. Reduktor nach Anspruch 8, wobei die freien Enden der seitlichen Finger (58) des Ringes durch einen Stützring (63) miteinander verbunden sind, an dem der Ring (70) angebracht ist, der den fluidischen Hohlraum (55) bildet, wobei zwischen den zwei zusammengefügten Ringen eine Dichtung (67) vorgesehen ist, die dazu bestimmt ist, die funktionalen Spiele zu absorbieren und axial das Gehäuse des Ringes, das den Hohlraum bildet, gegen die Stützfläche zu drücken.

10. Reduktor nach einem der Ansprüche 1 bis 9, wobei die erste der Querseiten (41) des Reduktors (10) eine stromaufwärtige Seite ist, und die zweite der Querseiten (43) des Reduktors (10) eine stromabwärtige Seite ist.

11. Turbomaschine insbesondere für ein Flugzeug, die einen Gasgeneratorabschnitt (G) und einen Antriebsabschnitt (P) mit einem Paar von koaxialen und entgegengesetzt drehenden Propellern (2, 3) umfasst, die über einen epizyklischen differentiellen Reduktor (10) angetrieben werden, der mit einer Turbine des Gasgeneratorabschnitts verbunden ist **dadurch gekennzeichnet, dass** der epizyklische differentielle Reduktor (10) gemäß einem der Ansprüche 1 bis 10 definiert ist.

## Claims

1. Reduction gear having an epicyclic train comprising a planetary input shaft (35), planets (37) meshing around said shaft and supported by a planet carrier (38), and two transverse sides (41, 43), **characterised in that** it comprises at least one fluid-transfer pipe (54) able to be connected to a fluid-supply source and passing through the planet carrier (38), while being constrained to rotate therewith, from a first of said transverse sides (41) of the reduction gear (10) as far as a second of said transverse sides (43) thereof in order to emerge outside the reduction gear and distribute the fluid, and in which the pipe (54) is provided, on said second of said transverse sides, with an annular cavity (55) containing the fluid to be distributed at the exit from the planet carrier.

2. Reduction gear according to claim 1, wherein the pipe (54) lubricates a bearing or the like (22) arranged on a transverse side of the planet carrier, external to the latter.

3. Reduction gear according to claim 2, wherein around the planets (37) an external ring gear (39) meshes, to which an output shaft (11) carrying the bearing (22) to be lubricated by the fluid emerging from the pipe is able to be connected.

4. Reduction gear according to any of claims 1 to 3, wherein the fluid pipe (54) passes axially through one of the hollow shafts (50) of the planet carrier (38), the planets (37) being respectively mounted around the hollow shafts.

5. Reduction gear according to any of claims 1 to 4, wherein a ring (57) having lateral fingers (58) is connected on a transverse side (41) to the planet carrier and supports the fluid cavity (55).

6. Reduction gear according to claim 5, wherein a plurality of hollow shafts (50) of the planet carrier have a fluid pipe (54) passing through each of them.

7. Reduction gear according to claim 6, wherein the lateral fingers (58) of the ring pass through the hollow shafts (50) of the planet carrier, so as to emerge on a transverse side (43) of the planet carrier in order to support the fluid cavity.

8. Reduction gear according to claim 7, wherein the fluid cavity (55) is formed by an annulus (70) connected to the free ends of the lateral fingers (58) of the ring (57) and has an axially open compartment (75) to which the fluid pipes are connected on one side, and which is able on the other side to come into contact, sealingly, with a support face (42) of the shaft carrying the bearing to be lubricated.

9. Reduction gear according to claim 8, wherein the free ends of the lateral fingers (58) of the ring are joined by a support annulus (63) against which the annulus (70) forming the fluid cavity (55) is mounted, and between the two assembled annuluses a seal (67) is provided which is intended to absorb the functional clearances and to axially press the compartment of the annulus forming the cavity against the support face.

10. Reduction gear according to any of claims 1 to 9, wherein said first of said transverse sides (41) of the reduction gear (10) is an upstream side, and said second of said transverse sides (43) of the reduction gear (10) is a downstream side.

11. Turbine engine, in particular for an aircraft, of the type comprising a gas generator part (G) and a propulsion part (P) having a pair of coaxial contra-rotating propellers (2, 3) driven by means of a differential epicyclic reduction gear (10) connected to a turbine of the gas generator part,
**characterised in that** the differential epicyclic reduction gear (10) is as defined according to any of claims 1 to 10.
